# EUROPÄISCHE PATENTSCHRIFT

(11) **EP 1 360 696 B1**
(45) Veröffentlichungstag und Bekanntmachung des Hinweises auf die Patenterteilung: **03.05.2006**
(21) Anmeldenummer: 02719836.5
(22) Anmeldetag: 14.02.2002
(51) Int. Cl.: G21C 3/322

(54) **BRENNELEMENT**
FUEL ELEMENT
ELEMENT COMBUSTIBLE

(30) Priorität: 15.02.2001 DE 10107037
(43) Veröffentlichungstag der Anmeldung: 12.11.2003
(73) Patentinhaber: Framatome ANP GmbH, 91058 Erlangen (DE)
(72) Erfinder: MEIER, Werner, 91358 Kunreuth (DE); RAU, Peter, 91359 Leutenbach (DE)
(74) Vertreter: Mörtel & Höfner
(86) Internationale Anmeldenummer: PCT/EP2002/001546
(87) Internationale Veröffentlichungsnummer: WO 2002/065477

(56) Entgegenhaltungen:
- EP-A- 1 049 106
- JP-A- 8 122 474
- JP-A- 9 159 775
- US-A- 3 663 367
- US-A- 4 765 949
- US-A- 5 327 472

## Beschreibung

Die Erfindung betrifft ein Brennelement mit Kernbrennstoff mit einer Vielzahl von durch Abstandhalter geführten Brennstäben zum Einsatz in einem Kernreaktor in einem Kernkraftwerk, wobei die Brennstäbe zwischen sich einen Kanal für einen Kühlmittelstrom bilden und mindestens ein Abstandhalter eine dem Kühlmittelstrom einen Drallimpuls aufzwingende Fahne trägt.

Im Kernreaktor eines Kernkraftwerkes ist der Kernbrennstoff üblicherweise in hermetisch verschlossenen Brennstäben angeordnet. Der oder jeder Brennstab ist einige Meter lang und weist ein Hüllrohr mit etwa 11 mm Durchmesser und einer Wanddicke von etwa 1 mm auf. Jedes Hüllrohr ist nahezu auf dessen gesamter Länge mit in Tabletten gepresstem Kernbrennstoff gefüllt. Üblicherweise sind je nach Reaktortyp ca. 80 bis 300 Brennstäbe in einem Brennelement zusammengefasst.

Zum Einsatz in Siedewasserreaktoren vorgesehene Brennelemente sind dabei mit einem sogenannten Brennelementkasten versehen, der die gesamte Brennelementstruktur seitlich umfasst und nach unten sowie oben offen ist. Innerhalb des Brennelementkastens stützen sich die Brennstäbe seitlich über Abstandhalter ab, die ihrerseits von innen an den Wänden des Brennelementkastens anliegen. Häufig sind einige der möglichen Brennstabpositionen anstelle von Brennstäben mit einem Kühlmittelrohr bestückt. Die Brennstäbe selbst bilden eine Vielzahl von sich über die gesamte Länge der Brennelemente erstreckende Kühlkanäle, in denen unvermeidbar die Abstandhalter als besondere Strömungswiderstände liegen.

Eine derartige Anordnung ist aus der EP 0 517 750 B1 bekannt. In der bekannten Anordnung tragen die Abstandhalter Fahnen, die derart in die von Brennstäben gebildeten Kühlkanäle hineingebogen sind, dass sie in dem den jeweiligen Kühlkanal durchströmenden Kühlmittelstrom einen Drall erzeugen. Eine durch den Drall erzwungene Rotationsbewegung des Kühlmittelstromes um seine vertikale Achse sorgt einerseits - insbesondere im oberen Bereich des Brennelements - für eine gute Benetzung der Brennstäbe mit flüssigem Kühlmittel und andererseits für einen Austausch von Kühlmittel zwischen einander benachbarten Kühlmittelströmen. Zur Gewährleistung eines ausreichend großen Anteils flüssigen Kühlmittels im oberen Bereich des Brennelements wird ein Teil des diesem zugeführten Kühlmittels durch ein Kühlmittelrohr direkt in diesen Bereich geführt. Durch diese Maßnahmen ist - insbesondere bei Siedewasserreaktoren - sichergestellt, dass auch im oberen Bereich der Brennelemente, in dem ein wesentlicher Teil des Kühlmittels bereits verdampft ist, die Oberfläche der Brennstäbe selbst mit noch flüssigem Kühlmittel benetzt ist.

Die zur Führung und Stützung der Brennstäbe erforderlichen Abstandhalter zusammen mit den von diesen getragenen Fahnen sind üblicherweise in Abständen von etwa 0,5 m übereinander vorgesehen und bilden für die Kühlmittelströme einen Widerstand. Dieser Widerstand erfordert einen nicht unerheblichen Teil der Pumpleistung von das Kühlmittel treibenden Umwälzpumpen. Die erforderliche Pumpenleistung liegt bei bekannten Kernreaktoren im Bereich von einigen Megawatt.

Der Erfindung liegt die Aufgabe zugrunde, für Brennelemente der eingangs genannten Art Abstandhalter zu schaffen, die nur geringe Strömungswiderstände aufweisen und dennoch in den Kühlmittelströmen einen ausreichend kräftigen Drall erzeugen.

Diese Aufgabe wird erfindungsgemäß gelöst durch die Merkmale des Anspruchs 1. Dazu sind die vom Abstandhalter getragenen Fahnen sowohl in Längsrichtung als auch in Querrichtung gewölbt und weisen entsprechend eine löffel- oder schaufelartige Form auf.

Die Erfindung geht dabei von der Überlegung aus, dass bei Brennelementen mit Kernbrennstoff in einer Vielzahl von durch Abstandhalter geführten Brennstäben zum Einsatz in einem Kernreaktor am Abstandhalter vorgesehene Mittel zur Ausübung eines Drallimpuls auf einen Kühlmittelstrom dann einen möglichst geringen Strömungswiderstand für das Kühlmittel darstellen, wenn durch deren Form bei der praktisch allen Querschnitten ein so großes Flächenträgheitsmoment gegeben ist, dass auch eine einfache Fahne aus dünnem Blech bereits ausreichend steif ist.

Überraschenderweise ermöglicht gerade die löffel- oder schaufelartige Form der oder jeder Fahne in doppelter Hinsicht eine Verringerung des Strömungswiderstandes des Abstandhalters. So ermöglicht diese Form einerseits aufgrund der großen Steifigkeit der Fahne den Einsatz von dünnem Ausgangswerkstoff für die Abstandhalter insgesamt. Andererseits ermöglicht diese Form einen optimierten Wirkungsgrad der Fahne selbst nach Art einer Turbinenschaufel im Kühlmittelstrom.

Eine besonders zweckmäßige Optimierungsmaßnahme besteht darin, dass sich diese Form der Fahne bis in deren im Abstandhalter liegenden Fuß fortsetzt. Dabei weist das Flächenträgheitsmoment der Querschnitte der Fahne im Bereich deren Austritts aus dem Abstandhalter ein Maximum auf.

In vorteilhafter Ausgestaltung ist zur Einstellung der Flächenträgheitsmomente der Querschnitte der löffel- bzw. schaufelartigen Form der Fahne bei deren Herstellung der eingesetzte Werkstoff in mehr als einer Richtung gestreckt und/oder gestaucht. Zudem sollte einerseits die Breite der Fahne an deren Freiende vorzugsweise halb so breit sein wie an deren Fuß. Andererseits sollte die freie Länge der Fahne etwa doppelt so groß sein wie die Breite an deren Fuß. Die oder jede Fahne und ein diese tragender Steg des Abstandhalters stellen vorteilhafterweise ein einziges Werkstück dar. Dabei setzt sich die Form der Fahne um das 0,5- bis 1,0-fache deren freien Länge in den Abstandhalter hinein fort. Zweckmäßigerweise ist darüber hinaus in Richtung der Längsachse der Fahne unterhalb deren Fuß eine Öffnung vorgesehen. Über diese werden Zellen im Abstandhalter, die durch den die Fahne tragenden Steg getrennt sind, miteinander verbunden.

Die oder jede Fahne ist aus der Ebene des diese tragenden Steges vorzugsweise um bis zu 45° in den Kanal für den Kühlmittelstrom hineingebogen, wobei der Kühlmittelstrom auf die konkave Seite der Fahne trifft. Dabei bildet eine Längsachse der Fahne mit einer Längskante des Steges auf der einem benachbarten Kreuzungspunkt mit einem anderen Steg zugekehrten Seite zweckmäßigerweise einen spitzen Winkel.

Zwei sich kreuzende Stege sollten jeweils auf beiden Seiten des Kreuzungspunktes je eine Fahne tragen. Dabei sollten alle demselben Kreuzungspunkt benachbarten Fahnen gleichsinnig auf den Kühlmittelstrom einwirken, während die Fahnen von einander benachbarten Kreuzungspunkten einander gegensinnige Drallimpulse erzeugen. Die Fahnen sind vorzugsweise von den Stegen des Abstandhalters auf derjenigen Seite getragen, über die das Kühlmittel abströmt. Dabei sind die Stege von an deren Längsseiten miteinander verbundenen Hülsen dargestellt, von denen jede je einen Brennstab umfasst.

Die mit der Erfindung erzielten Vorteile bestehen insbesondere darin, dass die durch die große Eigensteifigkeit der Fahnen mögliche Verwendung von beispielsweise nur 0,2 mm dickem oder starkem Blech - anstelle des bisher üblichen etwa 0,4 mm dicken Bleches - in Verbindung mit der optimierten Form der Fahne die erforderliche Antriebsleistung einer Umwälzpumpe um mehrere Prozentpunkte verringert und entsprechend messbar den Wirkungsgrad des Reaktors steigert.

Nachfolgend wird ein Ausführungsbeispiel der Erfindung anhand einer Zeichnung näher erläutert. Dabei zeigen:
- Fig. 1: schematisch einen Siedewasserreaktor mit Dampfturbine, Generator und Kondensator,
- Fig.2: ein teilweise aufgeschnittenes Brennelement,
- Fig. 3 u. 4: Abschnitte von Stegen eines Abstandhalters aus dem Brennelement in natürlicher Größe,
- Fig. 5: einen Ausschnitt aus einem Steg mit einer Fahne in stark vergrößerter perspektivischer Darstellung, und
- Fig. 6 bis 8: Querschnitte durch die Fahne aus Fig. 5 entlang der Linien I-I, II-II bzw. III-III.

Einander entsprechende Bauteile sind in allen Figuren mit den gleichen Bezugszeichen versehen.

In einem Druckbehälter 1 ist ein Siedewasserkernreaktor mit Brennelementen 2 und Steuerstäben 3 angeordnet. Die Steuerstäbe 3 sind von unten in Zwischenräume zwischen die Brennelemente 2 aus- und einschiebbar und steuern den Neutronenfluss im Reaktorkern. Sowohl die Brennelemente 2 als auch die Steuerstäbe 3 sind mit von unten nach oben durch den Reaktorkern strömendem Wasser als Kühlmittel K gekühlt. Das Wasser dient gleichzeitig als Moderator für den Neutronenfluss, indem es die Neutronen bis in einen Geschwindigkeitsbereich abbremst, bei dem diese von Atomkernen des Kernbrennstoffs eingefangen werden können.

Das Kühlmittel K wird auf seinem Weg entlang und durch die Brennelemente 2 aufgeheizt und teilweise verdampft. Der dabei gebildete Wasserdampf ist über eine Frischdampfleitung 4 einer Dampfturbine 5 zugeführt. Die Dampfturbine 5 treibt einen Generator 6. Aus der Dampfturbine 5 austretender abgearbeiteter Dampf kondensiert in einem Kondensator 7 zu Kondensat, das von einer Speisewasserpumpe 8 durch eine Speisewasserleitung 9 in den oberen Teil des Druckbehälters 1 zurückgefördert ist.

Auf dem Weg entlang der Brennelemente 2 nicht verdampftes Kühlmittel K strömt durch einen den Reaktorkern umfassenden (nicht dargestellten) Ringkanal wieder nach unten und wird durch Kühlmittelpumpen 10 in den Raum unterhalb des Reaktorkerns gefördert. Die Kühlmittelpumpe 10 ist bei jüngeren Reaktoren direkt im Ringkanal innerhalb des Druckbehälters 1 angeordnet.

In Fig. 2 ist eines der Brennelemente 2 vergleichsweise detailliert dargestellt. Ein Brennelementfuß 11 positioniert das Brennelement 2 mit einem Passorgan 12 auf einer (nicht dargestellten) unteren Gitterplatte und weist Einströmöffnungen 13, 14 für das Kühlmittel K auf. Ein Brennelementkasten 15 umfasst ein Bündel aus Brennstäben 16 auf deren gesamter Länge, stützt sich unten auf dem Brennelementfuß 11 ab und trägt in seinem oberen Ende einen Brennelementkopf, von dem lediglich ein Haltegriff 17 aus dem Brennelementkasten 15 nach oben hinausragt. Die etwa 4,5 m langen und etwa 11 mm dicken Brennstäbe 16 sind mit tablettiertem Kernbrennstoff gefüllt. Zur Stabilisierung und Führung des Bündels aus Brennstäben 16 dienen Abstandhalter 18, die sich ihrerseits von innen seitlich am Brennelementkasten 15 abstützen und von denen beispielsweise zehn Stück meist in etwa gleichen Abständen übereinander die Brennstäbe 16 zusammenhalten. Einige der möglichen Brennstabpositionen sind anstelle von Brennstäben 16 mit Haltestäben 19 bestückt und nehmen im Brennelement 2 zwischen dem Brennelementfuß 11 und dem Brennelementkopf auftretende Zugkräfte auf.

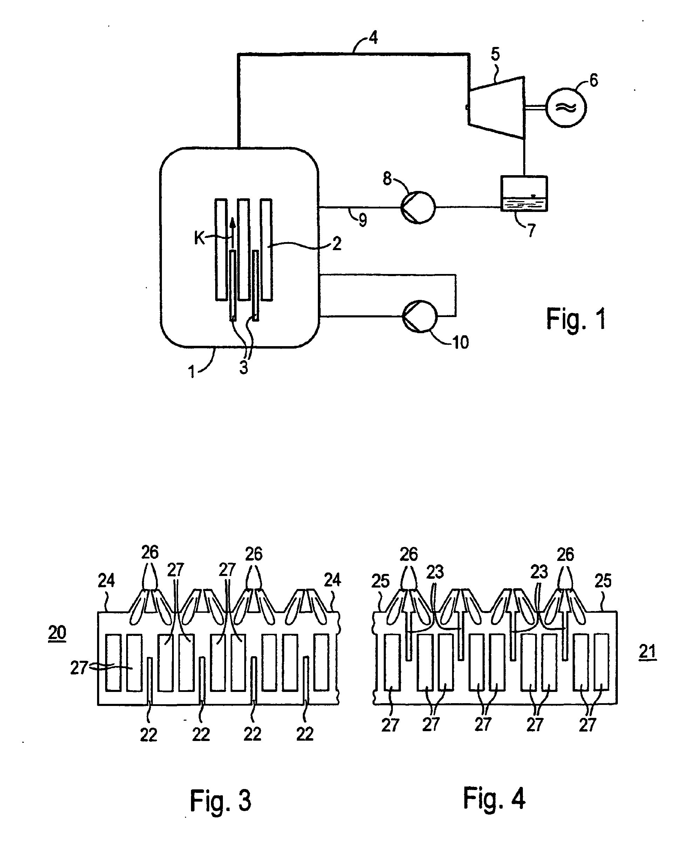

Ein in Fig. 2 sichtbarer Mantel des Abstandhalters 18 umfasst ein Gitter aus Stegen 20 und 21, die in den Fig. 3 und 4 ausschnittsweise in natürlicher Größe dargestellt sind. Die Stege 20 und 21 unterscheiden sich im Wesentlichen lediglich dadurch, dass im Steg 20 nach unten und im Steg 21 nach oben offene Montageschlitze 22 bzw. 23 vorgesehen sind. Beim dargestellten Ausführungsbeispiel werden jeweils neun zueinander parallele Stege 20 von oben in rechtwinklig zu ihnen angeordnete untereinander ebenfalls parallele neun Stege 21 kammartig derart in die Montageschlitze 23 eingesteckt, dass sie selber mit ihren Montageschlitzen 22 die unteren Hälften der Stege 21 flankieren. Ein auf diese Art gebildetes Gitter bildet im Querschnitt quadratische Maschen, von denen jede einen Brennstab 16 oder einen Haltestab 19 aufnimmt und in nicht dargestellter Art und Weise durch feste und flexible Stützmittel zentriert. Von den vom Gitter aus den Stegen 20 und 21 geführten Brennstäben 16 und Haltestäben 19 werden Kühlkanäle mit einem kreuzartigen Querschnitt gebildet. Die Kreuzungspunkte der Stege 20 und 21 liegen dabei jeweils im Zentrum eines derartigen kreuzartigen Kanalquerschnitts.

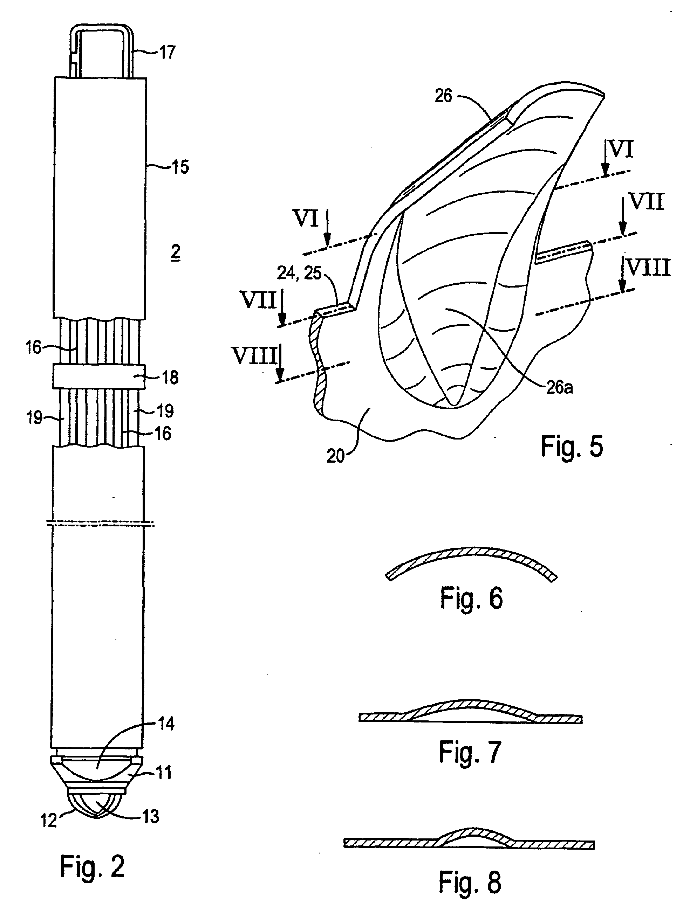

Die Stege 20 und 21 tragen auf ihrer oberen Kante 24 bzw. 25 Fahnen 26, die etwa doppelt so lang wie breit sind und die bis zu 45° aus der Zeichnungsebene heraus- oder in diese hineingebogen sind. Die Längsachse einer Fahne 26 bildet jeweils mit dem einem Kreuzungspunkt der Stege 20 oder 21 benachbarten Abschnitt der sie tragenden Kante 24 bzw. 25 einen spitzen Winkel. Die Fahne 26 hat an ihrem freien Ende eine kleinere Breite, vorzugsweise nur die halbe Breite, wie an ihrem Fuß 26a (Fig. 5). Dabei sind jeweils auf ein und demselben Steg 20 bzw. 21 demselben Kreuzungspunkt der Stege 20 und 21 zugeordnete Fahnen 26 in entgegengesetzter Richtung und die derselben Masche im Gitter zugeordneten Fahnen 26 in die gleiche Richtung gebogen. Auf diese Art sind in einer Draufsicht auf das von den Stegen 20 und 21 gebildete Gitter an jedem Kreuzungspunkt alle vier Fahnen entweder im Uhrzeigersinn oder im Gegenuhrzeigersinn gebogen, wobei an jeweils einander benachbarten Kreuzungspunkten einander entgegengesetzte Biegerichtungen erfolgt sind. Dadurch erzeugen die Fahnen an einander benachbarten Kreuzungspunkten einander entgegengesetzte Drallimpulse im dort vorbeifließenden Kühlmittelstrom.

In jedem der Stege 20 und 21 ist mindestens unterhalb jeder Fahne 26 eine Öffnung 27 vorgesehen, die einander benachbarte Maschen in dem von den Stegen 20 und 21 gebildeten Gitter miteinander verbindet. Diese Öffnungen 27 ermöglichen Querkomponenten des im Wesentlichen parallel zu den Brennstäben 16 gerichteten Kühlmittelstroms und mindern dadurch die Auswirkungen des verbliebenen Strömungswiderstandes der Fahnen 26.

Wie die Fig. 5 bis 8 zeigen, sind die Fahnen 26 unabhängig von ihrer Auslenkung aus der Ebene der Stege 20 bzw. 21 sowohl in Längs- als auch Querrichtung gewölbt. Sie weisen daher die Form eines Löffels oder einer Schaufel, wobei sie bei ihrer Formgebung in mehr als eine Richtung gestreckt und/oder gestaucht sind. Durch diese Form sind die Flächenträgheitsmomente sowohl der parallel als auch der rechtwinklig zur Längsachse der Fahne 26 liegenden Querschnitte so groß, dass im Normalbetrieb auftretende Kräfte die Fahnen 26 in sich nicht verformen und als Ganzes in keiner Richtung nennenswert auslenken können. Dadurch sind vom Kühlmittelstrom auf die konkave Seite der Fahne 26 ausgeübte Kräfte auch dann nicht in der Lage, die Fahne 26 zu Schwingungen mit nennenswerten Amplituden anzuregen, wenn die Stege 20 und 21 - ebenso wie die Fahnen 26 - aus lediglich 0,2 mm dickem Blech in einem Stück bestehen. Diese Vorteile werden im Ergebnis noch dadurch gefördert, dass die löffel- oder schaufelartige Form sich um das 0,5- bis 1-fache der Länge der Fahne 26 bis in den Steg 20 bzw. 21 fortsetzt. Dabei weist das Flächenträgheitsmoment der Querschnitte der Fahne 26 im Bereich von deren Anlenkung an den Steg 20 bzw. 21 in Höhe der Kante 24 bzw. 25 ein Maximum auf.

Ein im Abstandhalter 18 vorgesehenes Gitter kann anstelle aus rechtwinklig sich kreuzenden Stegen 20 und 21 auch aus Hülsen mit rundem Querschnitt aufgebaut sein. Dabei ist dann je Gittermasche eine Hülse erforderlich, die anstelle zu dem vorbeschriebenen Gitter je Hülse vier Fahnen 26 trägt.

Die Erfindung ist auch bei Druckwasserreaktoren auf deren brennelementkastenfreie Brennelemente entsprechend anwendbar.

## Patentansprüche

1. Brennelement mit Kernbrennstoff in einer Vielzahl von durch Abstandhalter (18) geführten Brennstäben (16) zum Einsatz in einem Kernreaktor in einem Kernkraftwerk, wobei die Brennstäbe (16) zwischen sich einen Kanal für einen Kühlmittelstrom (K) bilden und mindestens ein Abstandhalter (18) eine dem Kühlmittelstrom (K) einen Drallimpuls aufzwingende Fahne (26) trägt,
**dadurch gekennzeichnet,**
**dass** die Fahne (26) sowohl in Längsrichtung als auch in Querrichtung gewölbt ist und **dadurch** eine löffel- oder schaufelartige Form aufweist.

2. Brennelement nach Anspruch 1,
**dadurch gekennzeichnet,**
**dass** sich die Form der Fahne (26) bis in deren im Abstandhalter (18) liegenden Fuß (26a) fortsetzt.

3. Brennelement nach Anspruch 1 oder 2,
**dadurch gekennzeichnet,**
**dass** das Flächenträgheitsmoment der Querschnitte der Fahne (26) im Bereich deren Austritt aus dem Abstandhalter (18) ein Maximum aufweist.

4. Brennelement nach einem der Ansprüche 1 bis 3,
**dadurch gekennzeichnet,**
**dass** zur Einstellung der Flächenträgheitsmomente der Querschnitte der löffel- oder schaufelartigen Form der Fahne (26) bei deren Herstellung der eingesetzte Werkstoff in mehr als einer Richtung gestreckt und/oder gestaucht ist.

5. Brennelement nach einem der Ansprüche 1 bis 4,
**dadurch gekennzeichnet,**
**dass** die Breite der Fahne (26) an deren freien Ende kleiner, vorzugsweise halb so breit ist als an deren Fuß (26a).

6. Brennelement nach einem der Ansprüche 1 bis 5,
**dadurch gekennzeichnet,**
**dass** die freie Länge der Fahne (26) etwa doppelt so groß ist wie die Breite an deren Fuß (26a).

7. Brennelement nach einem der Ansprüche 1 bis 6,
**dadurch gekennzeichnet,**
**dass** die Fahne (26) und ein diese tragender Steg (20,21) des Abstandhalters (18) ein einziges Werkstück darstellen.

8. Brennelement nach einem der Ansprüche 1 bis 7,
**dadurch gekennzeichnet,**
**dass** die Form der Fahne (26) sich um das 0,5- bis 1,0-fache deren freien Länge in den Abstandhalter (18) hinein fortsetzt.

9. Brennelement nach einem der Ansprüche 1 bis 8,
**dadurch gekennzeichnet,**
**dass** in Richtung der Längsachse der Fahne (26) unterhalb deren Fuß (26a) eine Öffnung (27) vorgesehen ist, über die durch den die Fahne (26) tragenden Steg (20,21) getrennte Zellen im Abstandhalter (18) miteinander verbunden sind.

10. Brennelement nach einem der Ansprüche 1 bis 9,
**dadurch gekennzeichnet,**
**dass** die Fahne (26) aus der Ebene des diese tragenden Steges (20,21) um bis zu 45° in den Kanal für den Kühlmittelstrom (K) hineingebogen ist und dass der Kühlmittelstrom (K) auf die konkave Seite der Fahne (26) trifft.

11. Brennelement nach einem der Ansprüche 1 bis 10,
**dadurch gekennzeichnet,**
**dass** eine Längsachse der Fahne (26) mit einer Längskante (24,25) des Steges (20,21) auf der einem benachbarten Kreuzungspunkt mit einem anderen Steg (21,20) zugekehrten Seite einen spitzen Winkel bildet.

12. Brennelement nach einem der Ansprüche 1 bis 11,
**dadurch gekennzeichnet,**
**dass** zwei sich kreuzende Stege (20,21) jeweils auf beiden Seiten des Kreuzungspunktes je eine Fahne (26) tragen.

13. Brennelement nach einem der Ansprüche 1 bis 12,
**dadurch gekennzeichnet,**
**dass** alle demselben Kreuzungspunkt benachbarten Fahnen (26) gleichsinnig auf den Kühlmittelstrom einwirken.

14. Brennelement nach einem der Ansprüche 1 bis 13,
**dadurch gekennzeichnet,**
**dass** die Fahnen (26) von einander benachbarten Kreuzungspunkten einander gegensinnige Drallimpulse erzeugen.

15. Brennelement nach einem der Ansprüche 1 bis 14,
**dadurch gekennzeichnet,**
**dass** die Fahnen (26) von den Stegen (20,21) des Abstandhalters (18) auf der Seite getragen sind, über die das Kühlmittel (K) abströmt.

16. Brennelement nach einem der Ansprüche 1 bis 15,
**dadurch gekennzeichnet,**
**dass** die Stege (20,21) von an deren Längsseiten miteinander verbundenen Hülsen dargestellt sind, von denen jede je einen Brennstab (16) umfasst.

## Claims

1. Fuel element having nuclear fuel in a multiplicity of fuel rods (16) guided through spacers (18) for use in a nuclear reactor in a nuclear power station, whereby the fuel rods (16) between each other form a channel for a coolant flow (K) and at least one spacer (18) supports a vane (26) exerting a swirling impulse upon the coolant flow (K), **characterized in that** the vane (26) is curved both in the longitudinal direction and in the transverse direction and as a result exhibits a spoon- or shovel-like shape.

2. Fuel element according to Claim 1, **characterized in that** the form of the vane (26) extends up into its root (26a) lying in the spacer (18).

3. Fuel element according to Claim 1 or 2, **characterized in that** the geometrical moment of inertia of the cross sections of the vane (26) has a maximum in the vicinity of its exit from the spacer (18).

4. Fuel element according to any one of Claims 1 to 3, **characterized in that** in order to adjust the geometrical moments of inertia of the cross-sections of the spoon- or shovel-like shape of the vane (26) while it is being manufactured the material used is extended and/or compressed in more than one direction.

5. Fuel element according to any one of Claims 1 to 4, **characterized in that** the width of the vane (26) at its unattached end is less, preferably half as wide, than at its root (26a).

6. Fuel element according to any one of Claims 1 to 5, **characterized in that** the free length of the vane (26) is about twice as much as the width at its root (26a).

7. Fuel element according to any one of Claims 1 to 6, **characterized in that** the vane (26) and a bar (20, 21) of the spacer (18) supporting said vane constitute a single work-piece.

8. Fuel element according to any one of Claims 1 to 7, **characterized in that** the form of the vane (26) extends into the spacer (18) by 0.5 - 1 times its free length.

9. Fuel element according to any one of Claims 1 to 8, **characterized in that** an orifice (27), via which separate cells in the spacer (18) are connected to one another through the bar (20, 21) supporting the vane (26), is provided towards the longitudinal axis of the vane (26) underneath its root (26a).

10. Fuel element according to any one of Claims 1 to 9, **characterized in that** the vane (26) is bent from the plane of the bar (20, 21) supporting said vane by up to 45° into the channel for the coolant flow (K), whereby the coolant flow (K) strikes the concave side of the vane (26).

11. Fuel element according to any one of Claims 1 to 10, **characterized in that** a longitudinal axis of the vane (26) with a longitudinal edge (24, 25) of the bar (20, 21) forms an acute angle on the side turned towards an adjacent crossover point with another bar (21, 20).

12. Fuel element according to any one of Claims 1 to 11, **characterized in that** two bars (20, 21) crossing over one another each support a vane (26) on both sides of the crossover point respectively.

13. Fuel element according to any one of Claims 1 to 12, **characterized in that** all vanes (26) adjacent to the same crossover point act upon the coolant flow in the same direction.

14. Fuel element according to any one of Claims 1 to 13, **characterized in that** the vanes (26) produce from crossover points adjacent to one another swirling impulses in counter direction to one another.

15. Fuel element according to any one of Claims 1 to 14, **characterized in that** the vanes (26) are supported by the bars (20, 21) of the spacer (18) on the side, via which the coolant (K) flows off.

16. Fuel element according to any one of Claims 1 to 15, **characterized in that** the bars (20, 21) are constituted by sleeves, connected to one another on their longitudinal sides, each of which contains a fuel rod (16).

## Revendications

1. Assemblage combustible ayant du combustible nucléaire dans une pluralité de crayons (16) combustibles guidés à travers des entretoises (18) et destiné à être utilisé dans un réacteur nucléaire d'une centrale nucléaire, les crayons (16) combustibles formant entre eux un canal pour un courant (K) de fluide de refroidissement et au moins une entretoise (18) portant une ailette (26) impartissant une impulsion de tourbillonnement au courant (K) de fluide de refroidissement,
**caractérisé en ce que** l'ailette (26) est courbée tant dans la direction longitudinale que dans la direction transversale et a ainsi une forme en cuiller ou de type en aube.

2. Assemblage combustible suivant la revendication 1,
**caractérisé en ce que** la forme de l'ailette (26) se poursuit jusque dans son pied (26a) se trouvant dans l'entretoise (18).

3. Assemblage combustible suivant la revendication 1 ou 2,
**caractérisé en ce que** le moment d'inertie géométrique des sections transversales de l'ailette (26) présente un maximum dans la zone de sa sortie de l'entretoise (18).

4. Assemblage combustible suivant l'une des revendications 1 à 3,
**caractérisé en ce que** pour régler les moments d'inertie géométriques des sections transversales de la forme en cuiller ou de type en aube de l'ailette (26), le matériau utilisé lors de sa fabrication est étiré et/ou refoulé dans plus d'une direction.

5. Assemblage combustible suivant l'une des revendications 1 à 4,
**caractérisé en ce que** la largeur de l'ailette (26) à son extrémité libre est plus petite qu'à son pied (26a), en étant de préférence moitié plus petite.

6. Assemblage combustible suivant l'une des revendications 1 à 5,
**caractérisé en ce que** l'extrémité libre de l'ailette (26) est à peu près deux fois plus grande que la largeur à son pied (26a).

7. Assemblage combustible suivant l'une des revendications 1 à 6,
**caractérisé en ce que** l'ailette (26) et une partie pleine (20, 21) de l'entretoise (18), qui la porte, constituent une pièce unique.

8. Assemblage combustible suivant l'une des revendications 1 à 7,
**caractérisé en ce que** la forme de l'ailette (26) se poursuit dans l'entretoise (18) sur de 0,5 à 1,0 fois sa longueur libre.

9. Assemblage combustible suivant l'une des revendications 1 à 8,
**caractérisé en ce que**, dans la direction de l'axe longitudinal de l'ailette (26), il est prévu en dessous de son pied (26a) une ouverture (27) par laquelle des mailles de l'entretoise (18), séparées par la partie pleine (20, 21) portant l'ailette (26), communiquent.

10. Assemblage combustible suivant l'une des revendications 1 à 9,
**caractérisé en ce que** l'ailette (26) est courbée hors du plan de la partie pleine (20, 21) la portant de jusqu'à 45° en le canal pour le courant (K) de fluide de refroidissement, et **en ce que** le courant (K) de fluide de refroidissement arrive sur la face concave de l'ailette (26).

11. Assemblage combustible suivant l'une des revendications 1 à 10,
**caractérisé en ce qu'**un axe longitudinal de l'ailette (26) fait un angle aigu avec un bord (24, 25) longitudinal de la partie pleine (20, 21) du côté tourné vers un point d'intersection voisin avec une autre partie pleine (21, 20).

12. Assemblage combustible suivant l'une des revendications 1 à 11,
**caractérisé en ce que** deux parties pleines (20, 21) qui se croisent portent sur deux côtés du point d'intersection respectivement une ailette (26).

13. Assemblage combustible suivant l'une des revendications 1 à 12,
**caractérisé en ce que** toutes les ailettes (26) voisines du même point d'intersection agissent dans le même sens sur le courant du fluide de refroidissement.

14. Assemblage combustible suivant l'une des revendications 1 à 13,
**caractérisé en ce que** les ailettes (26) de points d'intersection mutuellement voisins produisent des impulsions de tourbillon de sens opposé.

15. Assemblage combustible suivant l'une des revendications 1 à 14,
**caractérisé en ce que** les ailettes (26) sont portées par les parties pleines (20, 21) de l'entretoise (18) du côté par lequel le fluide (K) de refroidissement sort.

16. Assemblage combustible suivant l'une des revendications 1 à 15,
**caractérisé en ce que** les parties pleines (20, 21) sont constituées par des manchons reliés les uns aux autres sur leur grand côté, dont chacun entoure un crayon (16) combustible.
